# EUROPEAN PATENT APPLICATION

(11) **EP 4 123 853 A1**
(43) Date of publication of application: **25.01.2023**
(21) Application number: 22185901.0
(22) Date of filing: 20.07.2022
(51) Int. Cl.: H02G 3/00, A47B 96/14, A47B 57/42, F16L 3/00, F16B 7/04

(54) **SUPPORT STRUCTURE FOR PROFILES SUPPORTING CABLE CARRIER SYSTEMS IN INDUSTRIAL DUCTS**

(30) Priority: 23.07.2021 IT 202100019586
(71) Applicant: Bticino S.p.A., 21100 Varese (IT)
(72) Inventor: ANDOLFO, Claudio, I-15066 GAVI (Alessandria) (IT); PIGNI, Roberto, I-21050 GORLA MAGGIORE (Varese) Italy (IT)
(74) Representative: Deambrogi, Edgardo

(57) **Abstract**

Described is a supporting structure (10) for profiles (60; 60') for backing cable duct systems in industrial conduits, comprising a body made by U or C bending of a shaped plate (L), which has a bottom wall (20) and a pair of side walls (22) facing each other, orthogonal to the bottom wall (20), which define between them a housing volume (V) of an end of at least one profile (60; 60') by means of which in an assembly or installation condition the profile (60; 60') is constrained in a transverse direction. The side walls (22) have respective edges (24) from which two pairs of respective opposite lateral fins (26, 28) project at different transverse sections of the housing volume (V), said fins being adapted to form first constraint elements of the profile (60; 60') in the longitudinal direction, and the bottom wall (20) has at least one rest tab (30) for the profile (60; 60'), said rest tab being adapted to form a second constraint element of the profile (60; 60') in the longitudinal direction acting in addition or as an alternative to the first constraint elements in an assembly or installation condition of the profile (60; 60'). The side walls (22) have, in a transverse section comprised between the transverse projection sections of said fins (26, 28), a pair of first opposite holes (40) adapted to receive a first mechanical element or member (62) for connecting the profile (60; 60'), and said tab (30) extending from the bottom wall (20) has a hole (42) adapted to receive a second mechanical element or member (64) for connecting the profile (60; 60').

## Description

The present invention relates to supporting systems for cable duct channels and trays in industrial conduits, and more specifically to a supporting structure for profiles for backing cable duct systems according to the preamble of claim 1.

A backing profile or bracket for cable duct conduits is traditionally obtained by punching and bending a metal sheet, and the surface intended to receive, resting thereon, one or more cable duct channels or trays is normally extended with two wings or side walls folded at right angles along the longitudinal edges.

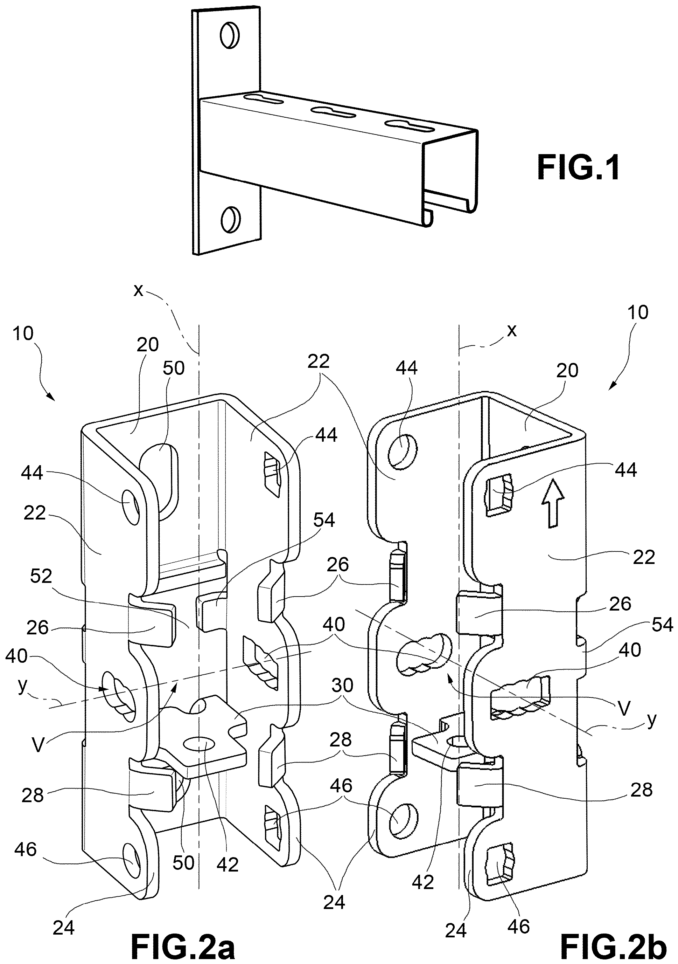

Such profiles are anchored to a load-bearing structure, such as a wall or ceiling, by means of anchoring elements, which, in the simplest case shown in Figure 1, may be a simple perforated plate to which the profile is welded at one end, intended to be stably secured to the wall or similar load-bearing structure by means of anchors.

Disadvantageously, such a cable duct system component is bulky, unwieldy, and needs to be produced in numerous variants depending on the different sizes and structures of the backing profiles, which in turn are configured in different sizes and structures for different load-bearing classes.

More complex anchoring elements consist of a U- or C-profile, having a perforated bottom surface, which is intended to be stably secured to the wall or similar load-bearing structure by means of anchors and from which a pair of parallel lateral edges extends transversely.

On the side walls of the backing profile, at the anchor end, and on the lateral edges of the anchor profile, there are formed fastening holes facing each other to allow the introduction of locking members (for example pins or bolts) for fixing the backing profile at the height that is desired or that is required by the installation configuration.

For the installation of cable duct systems where it is not possible to attach the backing profiles to the walls of the traversed rooms, it is known to make ceiling suspension systems by means of anchor plates from which U-profiles arranged in a vertical position are hung in order to anchor the profiles for backing the cable duct channels or trays.

In this case too, it is necessary to have available a plurality of anchoring elements adapted to backing profiles of different sizes and structures for different load-bearing classes.

In addition, in order to introduce the locking members into the respective fixing holes in the bracket and profile, they need to be aligned, and so the installer is required to look for the alignment position and to support the bracket in that position during the assembly operation.

The object of the present invention is to increase the convenience, efficiency and speed of installation of cable duct systems and in particular to reduce the number of components for wall or ceiling support of backing profiles of different sizes by ensuring the correct positioning and constraint of said profiles such that the latter may be used in a plurality of load classes.

A further object of the invention is to provide a supporting structure for profiles for backing cable duct systems, installation of which is possible without welding operations and with the option for fabrication in any type of finish, including those not compatible with welding.

Yet a further object of the invention is to provide a supporting structure for profiles for backing modular cable duct systems, which allows to build complex structural systems.

According to the invention, these objects are achieved by a supporting structure for backing profiles having the features claimed in claim 1.

Specific embodiments are the subject of the dependent claims.

A further subject of the invention is a supporting kit for profiles for backing cable duct systems in industrial conduits, as claimed.

In summary, the present invention is based on the principle of providing a supporting structure for profiles for backing cable duct systems obtainable by bending a shaped plate, which has transverse and longitudinal constraint elements of the profile, wherein the longitudinal constraint elements are selectable jointly or alternatively with each other. The supporting structure is also configured to receive a first and a second mechanical element or member for connecting the profile, wherein the mechanical elements or members are selectable jointly or alternatively with each other.

In a supporting kit for profiles for backing cable duct systems comprising a supporting structure as described above, a mechanical connection element or member is a fast-coupling fixing pin.

Advantageously, the supporting structure that is the subject of the invention allows easy and intuitive assembly of profiles for backing cable duct systems having different sizes, orientations and structures, as well as ensuring load limits comparable to those obtainable by supports assembled by welding.

Equally advantageously, the structure that is the subject of the invention is also adapted to receive and support non-perforated profiles.

Further features and advantages of the invention will be presented in greater detail in the following detailed description, given by way of non-limiting example, with reference to the accompanying drawings, in which:
Figure 1 is a perspective view of a supporting structure for profiles for backing cable duct systems according to the prior art;
Figures 2a and 2b are perspective views of a supporting structure for profiles for backing cable duct systems that is the subject of the invention;
Figure 3 shows a plan view of a metal sheet from which the supporting structure of Figures 2a and 2b may be obtained by stamping or punching and bending;
Figures 4a and 4b are an exploded perspective view and an assembled perspective view, respectively, of a supporting structure, a backing profile and a first mechanical element or member connecting the two;
Figure 5 is a perspective view from below of an assembled configuration of a supporting structure, a backing profile and a second mechanical element or member connecting the two;
Figures 6a and 6b are two perspective views, from above and below, respectively, of an assembled configuration of a supporting structure and a backing profile, in which the backing profile is a C-profile whose open side faces upward, and in which the mechanical element or member connecting the supporting structure and backing profile acts on the lateral surfaces or on the bottom surface of the backing profile, respectively;
Figures 6c and 6d are two perspective views of a manufacturing variant of the supporting structure, in an isolated configuration and in a configuration assembled with a backing profile, respectively;
Figure 7 is a perspective view of an assembled configuration of a supporting structure and a backing profile according to the invention in a ceiling anchor orientation;
Figure 8 is an exploded perspective view of a supporting structure, a backing profile, and a mechanical element or member connecting the two, in which the mechanical connecting element or member is a fast-coupling fixing pin;
Figure 9 is a perspective view of the fast-coupling fixing pin from Figure 8;
Figures 10a and 10b show the coupling of the fast-coupling fixing pin in Figure 9 to the supporting structure of the invention; and
Figures 11a and 11b are two perspective overviews of exemplary embodiments of complex structural systems obtainable by coupling supporting structures and backing profiles according to the invention.

A supporting structure for profiles for backing cable duct systems according to the invention is shown in Figures 2a and 2b and is indicated overall by 10.

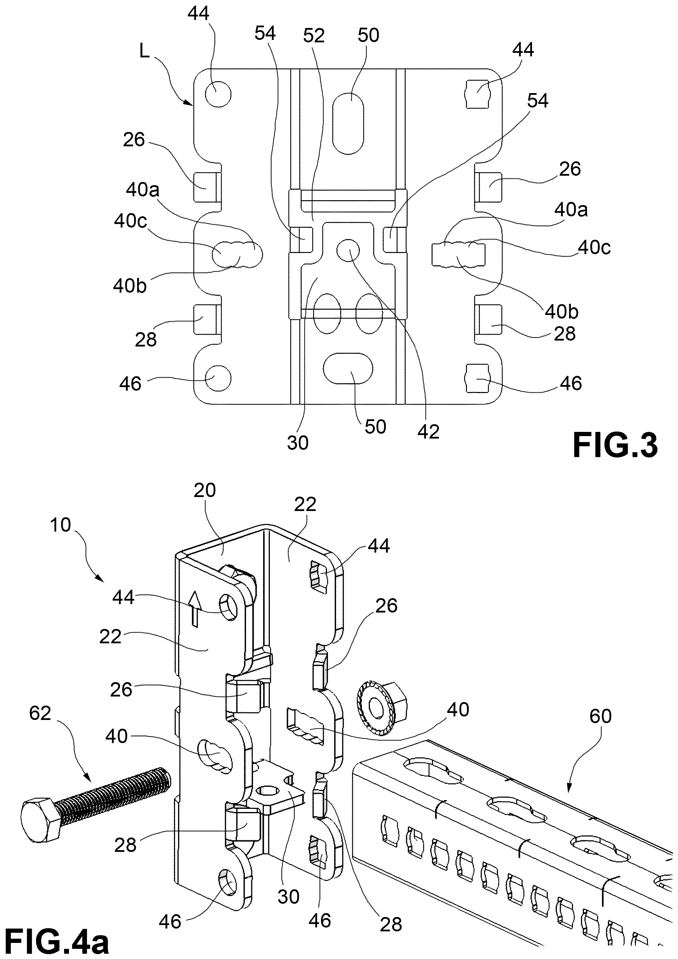

The supporting structure 10 comprises a body made by U or C bending of a single shaped plate L, which is shown in plan in Figure 3. The body of the supporting structure extends along a longitudinal axis X and has a bottom wall 20 and a pair of side walls 22 facing each other, orthogonal to the bottom wall 20, which define between them a housing volume V of an end of at least one profile for backing one or more cable duct channels or trays. The side walls 22 of the supporting structure, in an assembly or installation condition of the profile, constrain it in a direction transverse to the longitudinal axis X. They have respective edges 24 from which two pairs of respective opposite lateral fins 26, 28 project at least at two different transverse sections of the housing volume, said fins being bent with respect to the plane in which the side walls 22 are positioned, in such a way as to be arranged projecting into the housing volume. The pairs of fins 26, 28 are adapted to form first constraint elements of the profile in the direction of the longitudinal axis X in an intermediate section of the housing volume.

The bottom wall 20 of the supporting structure has at least one rest tab 30 for the profile extending in a plane incident to the plane of the bottom wall, and preferably orthogonal to said bottom wall, and is adapted to form a second constraint element of the profile in the direction of the longitudinal axis X acting in addition or as an alternative to the pairs of fins 26, 28 in an assembly or installation condition of the profile.

The side walls 22 of the supporting structure have, in a median transverse section comprised between the transverse projection sections of the pairs of fins 26, 28, a pair of holes 40 arranged opposite along an axis Y, adapted to receive a mechanical element or member for connecting the profile to the supporting structure, such as a fixing pin, bolt or other type of joining element. The rest tab 30 of the profile also has a hole, indicated by 42, adapted to receive a mechanical element or member for connecting the profile to the supporting structure, such as a fixing pin, bolt or other type of joining element.

With particular reference to the opposite holes 40, each of these has an elongated through opening, normal to the axis Y of the holes, the contour of which is shaped in such a way as to define a plurality of distinct, alternative seats 40a, 40b, 40c for introducing the mechanical connecting element or member. Advantageously, at least one hole of said pair of holes 40 has a through opening whose contour is at least partially shaped according to a polygonal line, in such a way as to receive and hold in rotation a mechanical connecting element or member having a square or polygonal head, as will be described in greater detail below with reference to a particular embodiment of the fixing pin.

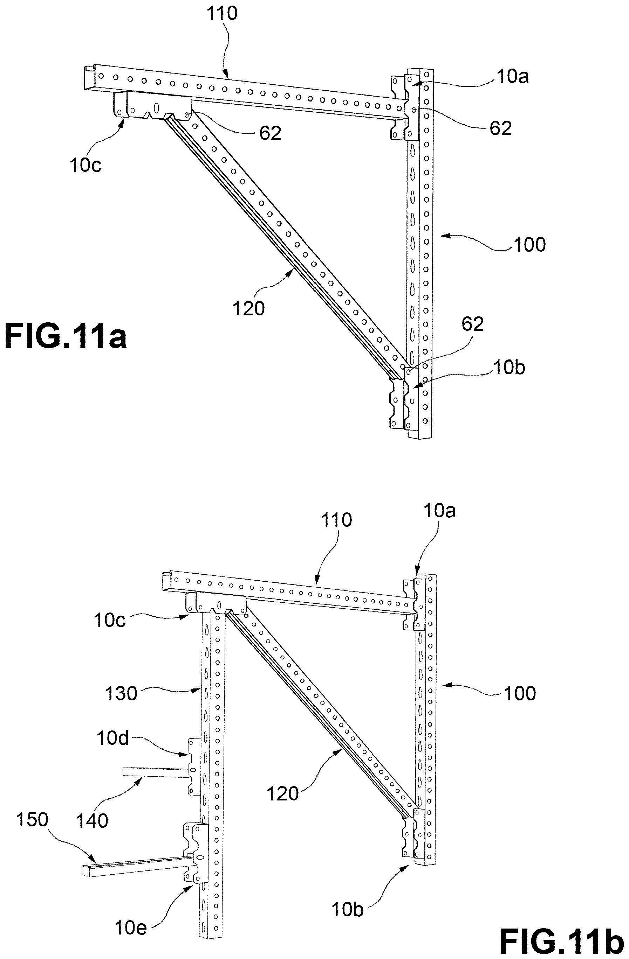

The side walls 22 of the supporting structure also have at their end cross sections respective pairs of opposite slots 44, 46, adapted to also receive mechanical connecting elements or members, such as a fixing pin, bolt or other joining element, for example for connection to a respective second profile, as will be shown later with reference to Figures 11a and 11b in the presentation of complex structural systems obtainable by couplings of supporting structures and backing profiles according to the invention.

The bottom wall 20 of the supporting structure has at least one slot - and in the embodiment shown in the figures, a pair of slots - 50 adapted to cooperate with an anchoring means to a load-bearing structure, such as an anchor or bolt, and allow easy fixing of the system, either to a wall or other support, adjustable in height and inclination. The supporting structure may be, by way of example, a vertical or horizontal architectural element, such as a wall or ceiling, or a profile stably anchored thereto.

Between the transverse projection sections of the fins 26, 28 the bottom wall 20 has a discontinuity, i.e., an opening, 52 and the side walls 22 have respective retaining formations 54 in the form of folded fins which protrude into the plane of the bottom wall in correspondence with the discontinuity 52, forming a kind of abutment or stop for the positioning of the profile in the housing volume.

Figure 4a is an exploded perspective view of a supporting structure 10 that is the subject of the invention, a backing profile 60 and a mechanical member 62 connecting the two, in the form of a bolt.

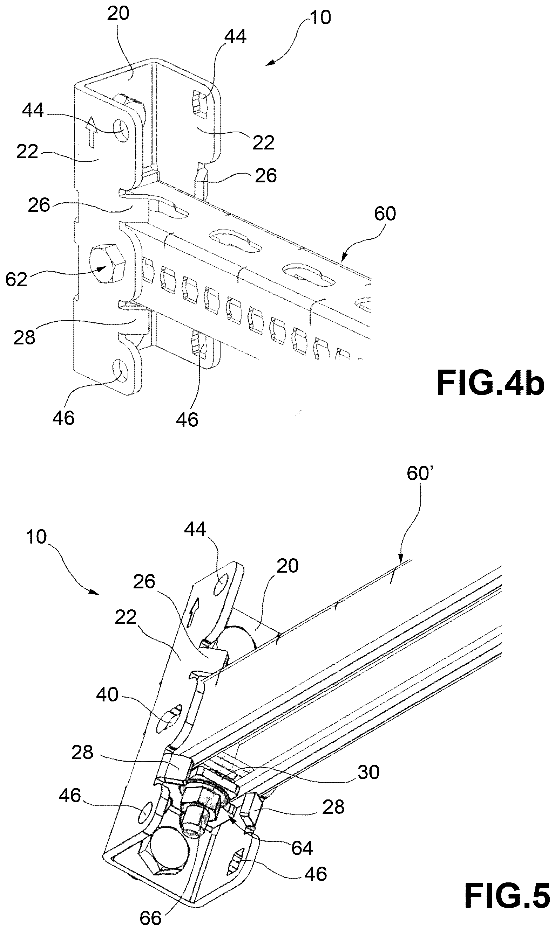

The backing profile 60 is, by way of example, a perforated C-profile, open downwardly, having a plurality of slots both on its own bottom wall and on its own side walls. Figure 4b shows the assembled configuration of the supporting structure 10 and backing profile 60, in which the mechanical connecting member 62 is inserted through the holes 40 of the supporting structure and the end slots of the side walls of the backing profile.

Figure 5 is a perspective view from below of an assembled configuration of the supporting structure 10 and backing profile 60', where the backing profile is, by way of example, a C-profile open downwardly, having a plurality of slots only on its own bottom wall. In this condition, it is not possible to employ the mechanical connecting member 62 inserted through the holes 40 of the supporting structure, and instead the backing profile is constrained to the latter by a different mechanical connecting member 64, such as a T-head bolt, which engages in the hole 42 of the rest tab 30 of the profile.

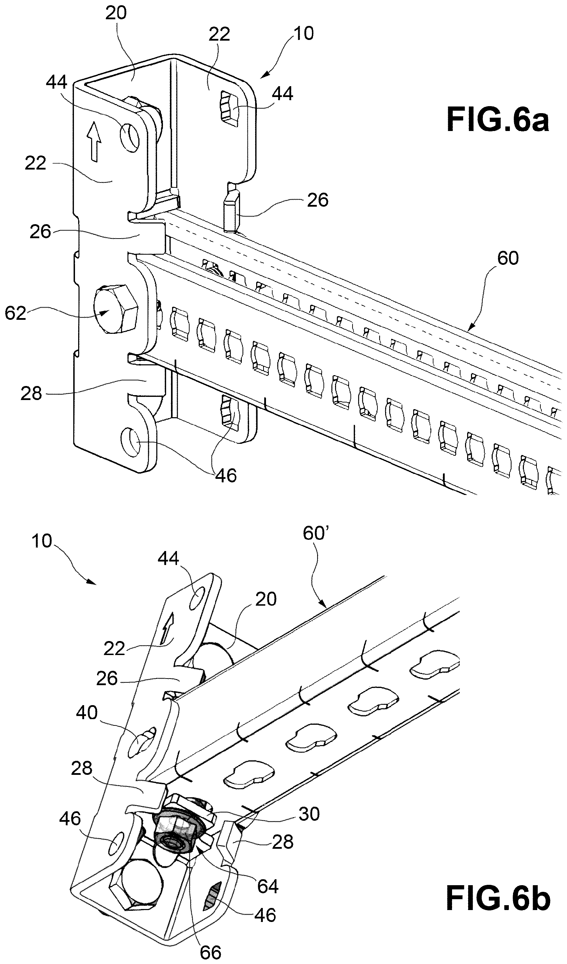

Figures 6a and 6b are two perspective views, from above and below, respectively, of an assembled configuration of the supporting structure 10 and of a C backing profile whose open side faces upward.

In Figure 6a, the backing profile is, by way of example, a perforated C-profile 60, having a plurality of slots on both its own bottom wall and on its own side walls. In the assembled configuration, a mechanical connecting member 62 inserted through the holes 40 of the supporting structure and the end slots of the side walls of the backing profile is employed. Figure 6b is a perspective view from below of an assembled configuration of the supporting structure 10 and backing profile 60', where the backing profile is, by way of example, a C-profile having a plurality of slots only on its own bottom wall. In this condition, the mechanical connecting member 64, such as a T-head bolt, engages in the hole 42 of the rest tab 30 of the profile.

The T-head bolt 64 comprises a cylindrical stem adapted to be inserted into the hole 42 of the rest tab 30, having at one end a fixed head adapted to abut with an area of the surface of the tab 30 surrounding the hole 42 in a first connection configuration, or with an internal surface area of the profile, which is an area of an internal surface of a pair of edges of the side walls of the profile folded internally, in a second connection configuration, when the profile is disposed with a downward opening. At the opposite end of the cylindrical stem there is formed a threaded portion arranged to receive a tightening nut 66 by screwing.

In an inverted profile arrangement, i.e., with an upward opening, the fixed head of the T-head bolt 64 is adapted to arrange itself in abutment with an internal surface area of the profile, surrounding a slot in the base wall of the profile.

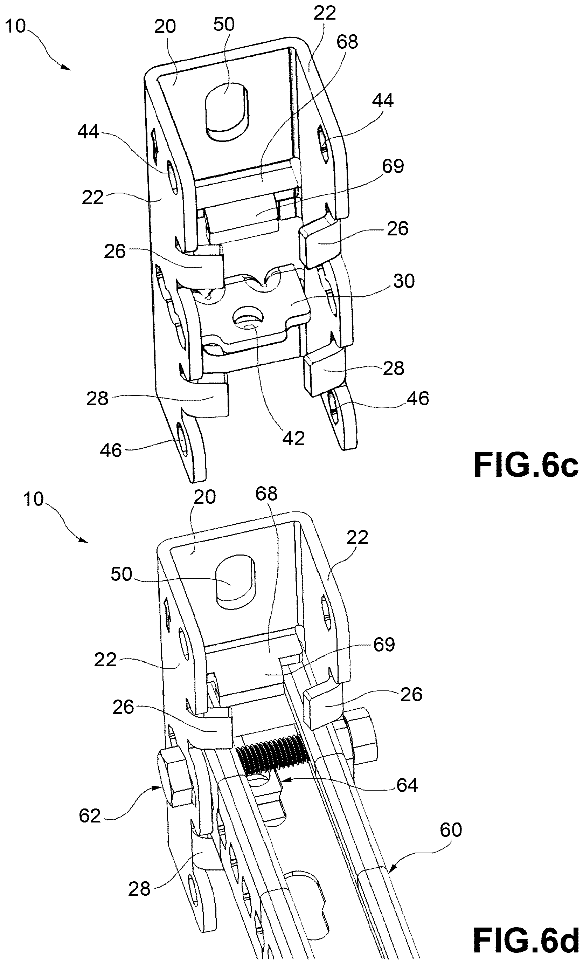

Figures 6c and 6d are perspective views of a manufacturing variant of the supporting structure, in which the opening 52 of the bottom wall 20 is delimited at the top by a transverse fin 68 folded toward the housing volume V, which has an end portion 69, whose transverse dimension is smaller than the transverse dimension of the fin 68 at the root, folded toward the middle section of the housing volume between the pairs of fins 26, 28.

As can be seen in Figure 6d, the transverse fin 68 performs, at the root, the function of a longitudinal constraint of the profile (as also in the case depicted in Figures 4b, 5, 6a and 6b), while the end portion 69 of this fin is accommodated between the edges of the backing profile and performs there the function of spacer, preventing the "closure" of the profile, i.e., preventing the side walls of the profile from being brought toward each other under the effect of a deformation force.

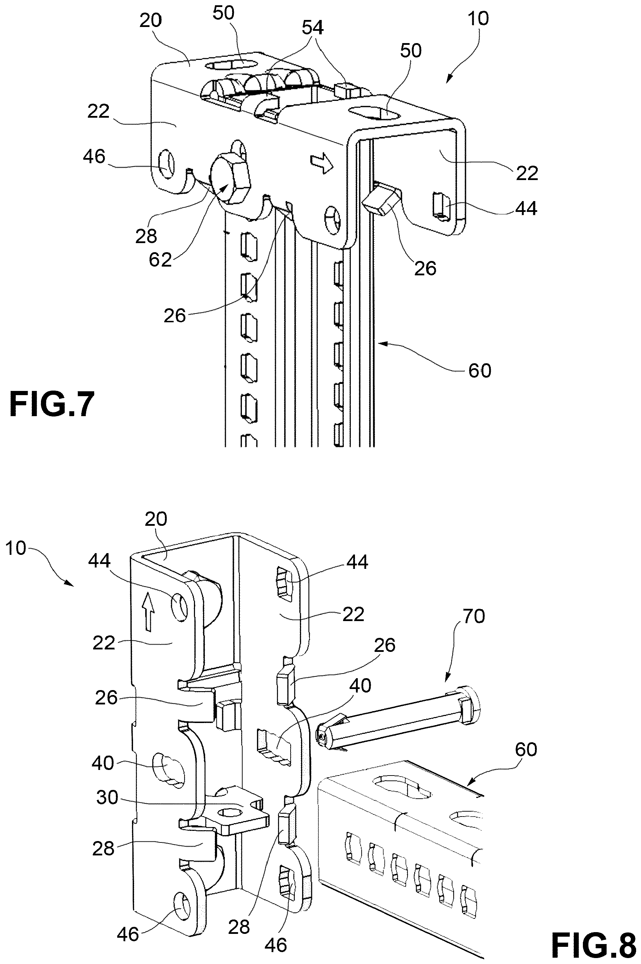

In Figure 7 is shown a perspective view of an assembled configuration of a supporting structure 10 according to the invention and a backing profile 60 in a ceiling anchor orientation, in which the assembly between supporting structure and backing profile is similar to that shown in Figure 6a.

The supporting structure 10 and at least one of a first and a second element or mechanical member connecting a profile to said supporting structure, wherein said first and second element or mechanical connecting member are a fixing pin or bolt, form a supporting kit for profiles for backing cable duct systems in industrial conduits.

In Figure 8 is shown an exploded perspective view of a supporting structure 10, a backing profile 60, and a mechanical member connecting the two, in which the mechanical connecting member is a fast-coupling fixing pin denoted as a whole by 70.

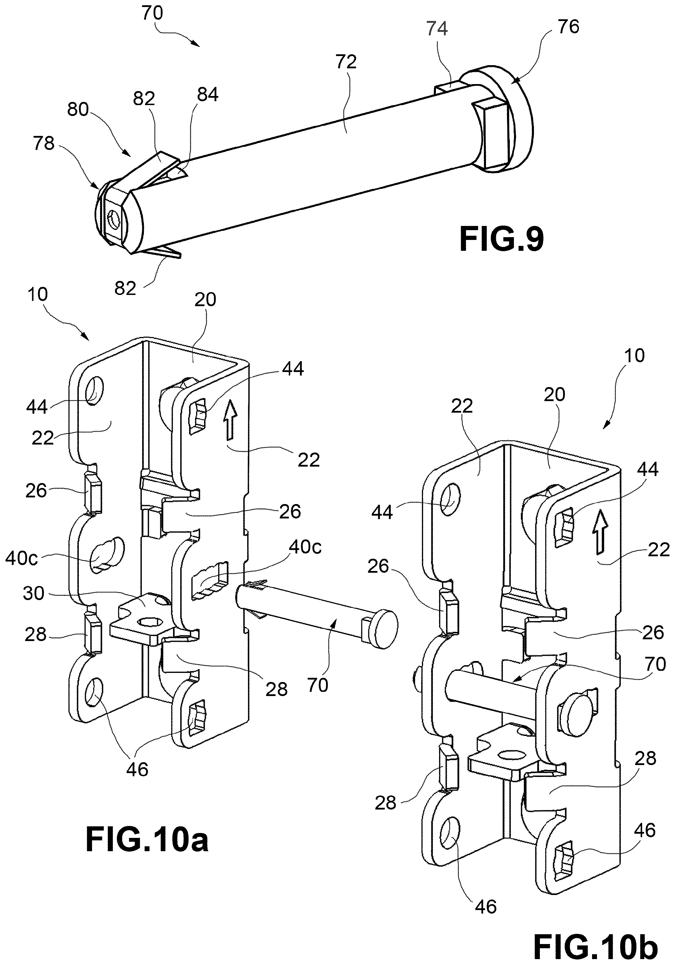

The fast-coupling fixing pin 70 - shown in Figure 9 - comprises a cylindrical stem 72 which has a portion 74 with an at least partially polygonal section adjacent to a head portion 76, which is adapted to engage by shape coupling with a hole 40 of said pair of opposite holes of the side walls 22 of the supporting structure 10 which has a through opening whose contour is at least partially shaped along a polygonal line, so as to constitute a constraint on the rotation of the pin, preventing its accidental release. The pin 70 also has an end portion 78 opposite the head portion 76 having at least one retractable coupling formation 80, which is adapted to assume a stable coupling position in which it protrudes with respect to the surface of the cylindrical stem 72 and a temporary insertion position, in which it is retracted at least at the level of the surface of the cylindrical stem 72, for example due to a stress imparted by the contour of the through opening of the hole 40 of said pair of opposite holes of the side walls 22 of the supporting structure, which has a shape congruent to the section of the cylindrical stem 72.

The portion 74 with an at least partially polygonal section of the pin 70, adjacent to a head portion 76 of the pin, advantageously engages the seats of the holes 40 of identical section, preventing rotation and thus accidental release of the pin.

The distance between the head portion 76 and the opposite end portion 78 having the retractable coupling formation 80 is equal to the distance between outer surfaces of the side walls 22 of the supporting structure.

In particular, the end portion 78 opposed to the head portion 76 and having at least one retractable coupling formation 80 comprises at least one elastically flexible leaf 82, housed in a respective recess 84 of the surface of the cylindrical stem 72, adapted to assume an open position of engagement in which it protrudes with respect to the surface of the cylindrical stem 72 and a closed insertion position, in which it seats completely in the recess 84 of the surface of the cylindrical stem 72. In this way, the pin 70 is easily insertable between backing profile and supporting structure without the use of tools.

Figures 10a and 10b show the coupling of the fast-coupling fixing pin 70 of Figure 9 to the supporting structure 10, in one of the seats 40a, 40b, 40c of the holes 40, more precisely in the seat 40c.

Lastly, Figures 11a and 11b are two perspective overviews of exemplary embodiments of complex structural systems obtainable by coupling supporting structures and backing profiles according to the invention.

Specifically, Figure 11a shows a structural system composed of a wall-anchored vertical profile 100, to which two vertically staggered supporting structures 10a, 10b according to the invention are coupled. There is, in turn, coupled to the upper supporting structure 10a, a horizontal profile 110 for backing one or more cable duct systems (not shown) in a median transverse section, fixed in place by a mechanical connecting member 62 arranged through the pair of opposing holes 40 along the axis Y of the supporting structure.

A supporting structure according to invention 10c is anchored at a distal end to the horizontal profile 110 and faces downward.

An inclined bracing profile 120 is connected to the supporting structure 10c and to the supporting structure 10b by means of respective mechanical connecting members 62 arranged through respective pairs of opposite slots 44, 46 formed at the end cross sections of the side walls 22 of the supporting structure. Due to the particular configuration of the supporting structure of the invention, two profiles departing from it along two divergent directions may be coupled to the structure 10c.

Figure 11b shows a further developed structural system based on the system in Figure 11a, in which an additional vertical profile 130 is attached to the supporting structure 10c, with two further supporting structures 10d, 10e according to the invention being coupled vertically and in a laterally offset manner to the additional vertical profile, to each of which further supporting structures there is coupled, in turn, a respective horizontal profile 140, 150 for backing one or more cable duct systems (not shown) extending in different planes and in different directions.

Of course, the variants illustrated are not exhaustive of the possibilities of forms of structural systems, but purely indicative; any other arrangements of profiles and their respective supporting structures being possible without departing from the scope of the invention. Advantageously, such structural systems are installed by deciding directly at the construction site which length of profile is most suitable for the fabrication of a predetermined arrangement of cable duct systems without welding operations, which makes it possible to fabricate the systems in any type of finish, including those not compatible with welding.

Conveniently, the pairs of respective opposite side fins 26 and 28, rest tab 30, and retaining formations 54 which protrude into the plane of the bottom wall ensure the constraint and correct positioning of a backing profile, in particular constraining the profile in the direction of the longitudinal axis X of the supporting structure and in its longitudinal direction, cooperating with the side walls 22 in the constraint in the transverse direction. This allows easy and intuitive assembly, and also ensures load limits comparable to the brackets assembled to respective anchor plates by welding.

Of course, without prejudice to the principle of the invention, the manufacturing details and the embodiments may vary widely compared to that which is described and illustrated purely by way of a non-limiting example, without departing from the protection scope of this invention as defined in the appended claims.

## Claims

1. Supporting structure (10) for profiles (60; 60') for backing cable duct systems in industrial conduits, **characterized in that** it comprises a body made by U or C bending of a shaped plate (L), which extends along a longitudinal axis (X) and has a bottom wall (20) and a pair of side walls (22) facing each other, orthogonal to the bottom wall (20), which define between them a housing volume (V) of an end of at least one profile (60; 60') by means of which in an assembly or installation condition the profile (60; 60') is constrained in a transverse direction,
wherein the side walls (22) have respective edges (24) from which two pairs of respective opposite lateral fins (26, 28), arranged projecting into the housing volume (V), project at different transverse sections of the housing volume (V), said fins being adapted to form first constraint elements of the profile (60; 60') in the longitudinal direction at an intermediate section of the housing volume (V), and
wherein the bottom wall (20) has at least one rest tab (30) for the profile (60; 60') extending in a plane incident to the plane of said bottom wall (20), said rest tab being adapted to form a second constraint element of the profile (60; 60') in the longitudinal direction acting in addition or as an alternative to the first constraint elements in an assembly or installation condition of the profile (60; 60'),
and **in that** said side walls (22) have, in a transverse section comprised between the transverse projection sections of said fins (26, 28), a pair of first opposite holes (40) adapted to receive a first mechanical element or member (62) for connecting the profile (60; 60'), and said tab (30) extending from the bottom wall (20) has a hole (42) adapted to receive a second mechanical element or member (64) for connecting the profile (60; 60').

2. Supporting structure (10) according to claim 1, wherein the bottom wall (20) has at least one slot (50) adapted to cooperate with an anchoring means to a bearing structure.

3. Supporting structure (10) according to claim 1 or 2, wherein said bottom wall (20) has a discontinuity (52) between the transverse projection sections of said fins (26, 28) and said side walls (22) have retaining formations (54) which protrude into the plane of the bottom wall (20) in correspondence with said discontinuity (52).

4. Supporting structure (10) according to any one of the preceding claims, wherein said lateral walls (22) have at their end cross sections respective pairs of opposite slots (44, 46), adapted to receive mechanical elements or members for connecting a respective second profile.

5. Supporting structure (10) according to any one of the preceding claims, wherein each hole (40) of said pair of opposite holes of the side walls (22), adapted to receive a first mechanical element or member (62) for connecting the profile (60; 60'), has an elongated through opening orthogonal to the axis of the hole, the contour of which is shaped in such a way as to define a plurality of distinct alternative seats (40a, 40b, 40c) for introducing said first mechanical connecting element or member (62).

6. Supporting structure (10) according to any one of the preceding claims, wherein at least one hole (40) of said pair of opposite holes of the side walls (22), adapted to receive a first mechanical element or member (62) for connecting the profile (60; 60'), has a through opening whose contour is at least partially shaped according to a polygonal line.

7. Supporting kit for profiles (60; 60') for backing cable ducts in industrial conduits, comprising:
a supporting structure (10) according to any one of the preceding claims, adapted to be anchored to a load-bearing structure and intended to receive at least one backing profile (60; 60') for cable ducts having a U-shaped or C-shaped cross section which comprises a base wall and a pair of lateral walls, wherein the lateral walls of the backing profile (60; 60') have, at a longitudinal end, at least a pair of facing slots intended to receiving a first mechanical element or member (62) for connecting the profile (60; 60') to the supporting structure (10) in an assembly or installation condition in which the end of the profile is received in the housing volume (V) of the supporting structure (10), by means of which the backing profile (60; 60') is constrained in a transverse direction, and/or the base wall has, at the longitudinal end, at least one slot intended for receiving a second mechanical element or member (64) for connecting the profile (60; 60') to the supporting structure (10) in the assembly or installation condition in which the end of the profile rests on the tab (30) extending from the bottom wall (20) of the supporting structure (10), and
at least one of a first and a second mechanical element or member (62; 64) for connecting the profile (60; 60') to said supporting structure (10),
wherein said first and second mechanical connecting element or member (62, 64) are a fixing pin or a bolt.

8. Supporting kit according to claim 7, wherein said first connecting mechanical element or member is a fast-coupling fixing pin (70), having a cylindrical stem (72) which has a portion with an at least partially polygonal section (74) adjacent to a head portion (76), able to engage by shape coupling with a hole (40) of said pair of opposite holes of the side walls (22) of the supporting structure (10) which has a through opening whose contour is at least partially shaped along a polygonal line, so as to constitute a constraint on the rotation of the pin (70), and an end portion (78) opposite the head portion (76) having at least one retractable coupling formation (80), which is adapted to assume a stable coupling position in which said coupling formation (80) protrudes with respect to the surface of the cylindrical stem (72) and a temporary insertion position, in which said coupling formation (80) is retracted at least at the level of the surface of the cylindrical stem (72) due to a stress imparted by the contour of the through opening of the hole (40) of said pair of opposite holes of the side walls (22) of the supporting structure (10), which has a shape congruent to the section of the cylindrical stem (72),
wherein the distance between the head portion (76) and the opposite end portion (78) having said at least one retractable coupling formation (80) is equal to the distance between the outer surfaces of the side walls (22) of the supporting structure (10).

9. Supporting kit according to claim 8, wherein said end portion (78) opposed to the head portion (76) and having at least one retractable coupling formation (80) comprises at least one elastically flexible leaf (82), housed in a respective recess (84) of the surface of the cylindrical stem (72), adapted to assume an open position of engagement in which it protrudes with respect to the surface of the cylindrical stem (72) and a closed insertion position, in which it seats completely in the recess (84) of the surface of the cylindrical stem (72).

10. Supporting kit according to any one of claims 7 to 9, wherein said second connecting mechanical element or member (64) is a bolt comprising a cylindrical stem adapted to be inserted into the hole (42) of the rest tab (30) extending from the bottom wall (20) of the supporting structure (10), having at one end a fixed head adapted to abut with an area of the surface of said tab (30) surrounding the hole (42) in a first connection configuration, or with an internal surface area of the profile (60; 60'), including an area surrounding a slot in the base wall of the profile or an area of an internal surface of a pair of edges of the side walls of the profile (60; 60') folded internally, in a second inverted connection configuration, and at the opposite end a threaded portion arranged to receive a tightening nut by screwing.
